# EUROPEAN PATENT SPECIFICATION

(11) **EP 0 946 117 B1**
(45) Date of publication and mention of the grant of the patent: **11.07.2001**
(21) Application number: 97944975.8
(22) Date of filing: 09.10.1997
(51) Int. Cl.: A47J 36/28, A47G 23/02

(54) **DEVICE FOR RAISING THE TEMPERATURE OF A WINE OR DRINKING LIQUOR IN A CONTAINER**
VORRICHTUNG ZUM AUFHEIZEN EINES WEINES ODER EINES ALKOHOLISCHEN GETRÄNKES IN EINEM GEFÄSZ
DISPOSITIF POUR ELEVER LA TEMPERATURE D'UN VIN OU D'UNE BOISSON ALCOOLISEE DANS UN RECIPIENT

(30) Priority: 09.10.1996 GB 9621022
(43) Date of publication of application: 06.10.1999
(73) Proprietor: White, Stefan Edwin, Hurley, Berkshire SL6 5NB (GB)
(72) Inventor: White, Stefan Edwin, Hurley, Berkshire SL6 5NB (GB)
(74) Representative: Stonehouse, Sidney William
(86) International application number: GB9702778
(87) International publication number: WO9815217

(56) References cited:
- EP-A- 0 526 928
- DE-A- 3 108 760
- FR-A- 1 603 429
- US-A- 1 850 166
- US-A- 2 220 777
- US-A- 2 596 664
- US-A- 4 451 383
- US-A- 5 188 877
- US-A- 5 205 278

## Description

This invention relates to a device adapted for raising the temperature of a wine or drinking liquor in a bottle or other container, particularly but not exclusively red wine or sake.

Most red wines benefit from not being cooled or chilled for serving, unlike white wines. In particular, to enjoy red wine at its best its temperature should be raised to a point where its aromatic elements begin to vaporise. The ideal temperature for serving red wine is between (54°F) 12,2°C and (64°F) 17,8°C, dependant on the lightness or fullness of the wine.

Red wine is often stored in a cellar where the temperature is well below the ideal serving temperature and is often in the order of (50°F) 10°C. It is known to allow the wine to stand at room temperature to raise its temperature, however it may take several hours to increase the temperature even by (10°F) 5,6°C. It is also known to stand red wine in hot water to raise its temperature more rapidly. However, controlling the temperature is then rather inexact, and it is easy for the wine to become too hot, spoiling the taste. There is, therefore, a need for a quick, consistent and controllable means of warming wine such as red wine in a bottle or other container to a preferred serving temperature. It is also desirable to heat some other wines or drinking liquors such as sake before consumption.

US 2 220 777 discloses warming units in various forms, including a unit for warming milk in a bottle. The units contain a mixture of sodium acetate and water, and a device for scraping the inside surface of the unit, which causes crystallisation of the sodium acetate which produces heat. Crystallisation of the sodium acetate can also be initiated by vibrations therein.

According to the present invention there is provided a device for raising the temperature of a wine or drinking liquor in a container, the device being adapted to surround at least a portion of the container, and containing a substance or substances capable of radiating heat, which heat is transferred from the device to the wine or drinking liquor in the container to raise the temperature thereof, wherein the heat is caused to be produced by crystals formed from a chemical reaction between sodium acetate trihydrate and de-mineralised water.

The formation of the crystals may be triggered by a shock wave which may be produced by the deformation of one or more objects contained in the device. The objects may be metal plates.

The substance or substances used in the device and/or the amount of the or each substance can be chosen to give a specified amount of heat radiated by the device per unit time, and an overall maximum total amount of heat radiated by the device.

Thus for a given start temperature of the wine or drinking liquor in the container, the amount of time of use for the device necessary to achieve a desired temperature or temperature range of the wine or liquor can be calculated. The maximum temperature achieved by the wine or liquor can also be determined, and the substance or substances and/or the amounts thereof chosen such that a desired maximum temperature is not exceeded.

In one embodiment, the device is particularly adapted for use in warming red wine in a bottle to a desirable serving temperature.

The device may be re-usable and preferably is adapted to surround all or a substantial portion of the container.

The device may be made of vinyl polymer material e.g. PVC, which may be clear, opaque, coloured, or printed with a design, product name, logo or the like. The device may be printed with instructions for use and re-use.

The invention will now be described by way of example only, and with reference to the accompanying drawings, wherein:
**Figure 1** is a view of a device according to the invention shown surrounding a bottle;
**Figures 2 and 3** show modified forms of the device of Figure 1 also surrounding bottles;
**Figure 4** is a front view of a further device in accordance with the invention shown surrounding a bottle;
**Figure 5** is a back view of the device of Figure 4;
**Figure 6** is an opened-out view of the device of Figures 4 and 5; and
**Figure 7** is an opened-out view of a further embodiment of the invention.

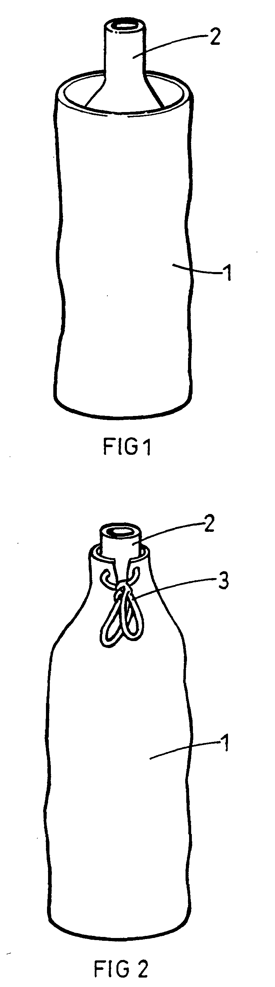

Referring to Figure 1, a device 1 in a sleeve-like form made from vinyl polymer fabric preferably medical grade PVC is shown surrounding a substantial portion of a bottle 2 containing wine. The bottle may be, for example, a standard 75cl capacity wine bottle, for which the device 1, typically, is approximately 75mm in diameter and approximately 220mm in height. A smaller version, say approximately 73mm in diameter and approximately 190mm in height, may be produced. The device further comprises a base (not shown) which is integrally formed with the sleeve portion, and covers the bottom of the bottle. The base may be omitted. Within the wall of the device is contained a substance or substances capable of radiating heat.

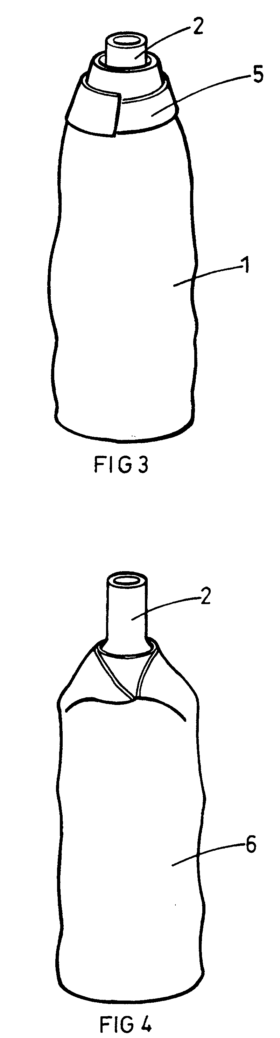

Figures 2 and 3 show modifications to the device. In Figure 2 the device is extended to surround the neck of the bottle 2 and is retained around the neck using a draw-string 3. In Figure 3, the device 1 again surrounds the neck of the bottle 2 and is held in place by a tie 5 made of Velcro (Registered Trademark).

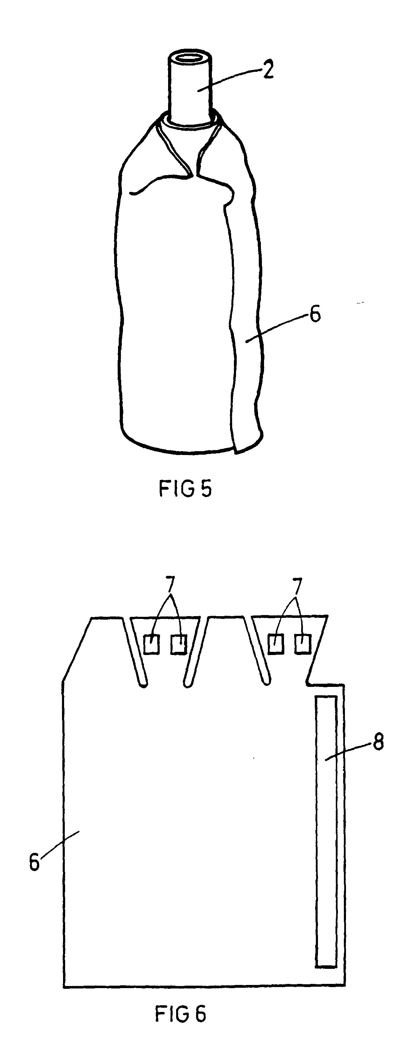

Figures 4 to 6 show a further embodiment of the invention. The device 6 in this case wraps around the bottle 2 and is held in place by tabs 7 and a strip 8 (Figure 6) each made of Velcro (Registered Trademark).

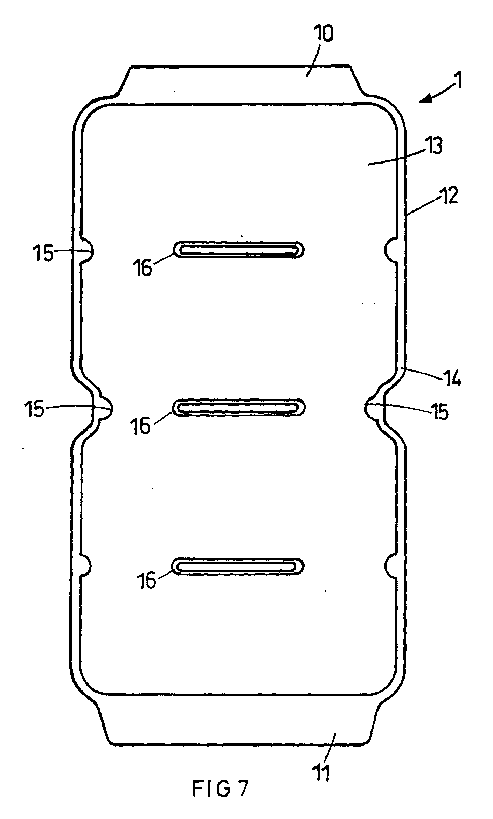

Figure 7 illustrates a preferred embodiment of the device 1. This is shown opened-out into a flat sheet, however, in production the device is folded into the shape of a sleeve such that tabs 10, 11 overlap and are welded together. The device is approximately 155mm in height, 310mm long when opened out, and has a thickness of approximately 15mm when filled for use. The device comprises an inner layer 12 and an outer, opaque layer 13 which are welded together, along a weld line 14, to form a wall of the device. The substance or substances used to generate heat are placed between the layers, and sealed in the space formed therebetween. The seal line 14 incorporates semi-circular portion 15. The device is provided with transparent windows 16 in the opaque layer 13. This allows the contents of the device to be viewed, and so allows a user to determine from the visual state of the contents whether or not the device is in a condition for use. The windows are elongate in shape and their longitudinal axes are each aligned with two of the semi-circular portions 15 as shown. This provides lines along which the device can easily fold when positioned around a container for use. The device contains sodium acetate trihydrate and demineralised water which react together as described below to produce heat. The outer layer of the wall of the vinyl fabric of the device is opaque and has instructions printed thereon for the use and reuse of the device. The inner layer of the wall is transparent, such that heat radiated by the device is directed inwardly through the transparent layer to the container.

In each of the above embodiments the wall of the device is hollow and contains a substance or substances able to produce heat to be radiated from the device into the bottle it surrounds in use, heating the wine in the bottle. The wall of the device contains a liquid mixture of pharmaceutical grade sodium acetate trihydrate, which is non-toxic, and de-mineralised water. A stainless steel plate, not shown, is provided within the device, which can be deformed conveniently by hand pressure with a click action. The plate is retained in a small enclosure in the device, which prevents it from moving around inside the device and makes it easier to locate.

For use, the plate is deformed so that it produces a shock wave through the liquid mixture. This initiates a chemical reaction in the liquid mixture causing it to turn into crystals. As the crystals develop they produce heat. When the device is placed around the bottle the heat produced by the crystals is radiated through the wall of the device into the bottle to heat the wine therein.

The device may be re-used. This can be achieved by placing the device in hot water for a sufficient length of time for the crystals to become liquid again. Once the liquid has cooled the device is ready for re-use. This can also be achieved by placing the device in a micro-wave oven and applying micro-waves thereto until the crystals become liquefied.

The sodium acetate trihydrate/de-mineralised water liquid mixture is transparent, and the crystals formed by this mixture are white. Transparent windows are provided in the opaque vinyl fabric making up the device. These permit part of the contents of the device to be viewed. This will aid a user to determine whether or not the device is in a condition to be used. If one of the transparent portions of the sleeve is positioned radially opposite the stainless steel plate, a user will also be able to determine whether or not full transformation of the liquid mixture into crystals has been achieved.

The ratio of sodium acetate trihydrate to de-mineralised water used in the liquid mixture of the device determines the heat output of the device per unit time and the overall total heat output of the device. To heat red wine from a cellar temperature of approximately (50°F) 10°C, a ratio of 45% sodium acetate trihydrate to 55% de-mineralised water is chosen. With this ratio and approximate start temperature, leaving an activated device in place around the bottle for approximately 8 mins will heat the red wine to approximately (54°F) 12,2°C to (57°F) 13,9°C, the preferred temperature range for light-bodied red wines. Leaving the activated device in place for approximately 10 mins will heat the red wine to approximately (58°F) 14,4°C to (61°F) 16,1°C the preferred temperature range for medium-bodied red wines, and leaving the activated device in place for approximately 12 mins will heat the red wine to approximately (62°F) 16,7°C to (64°F) 17,8°C, the preferred temperature range for full-bodied red wines. With this ratio and start temperature of the wine, the total amount of heat radiated by the device will not heat the red wine to above a temperature of approximately (64°F) 17,8°C (above which temperature the wine is likely to be spoilt).

Choosing a different sodium acetate trihydrate to de-mineralised water ratio, different heat outputs per unit time and total heat outputs may be obtained. For example, a higher percentage of sodium acetate trihydrate may be used, which will give a higher total heat output. This could be used for heating sake, for example, which is ideally consumed at a much higher temperature than red wine.

## Claims

1. A device for raising the temperature of a wine or drinking liquor in a container (2), the device (1) being adapted to surround at least a portion of the container (2), and containing a substance or substances capable of radiating heat, which heat is transferred from the device (1) to the wine or liquor in the container (2) to raise the temperature thereof, characterised in that the heat is caused to be produced by crystals formed from a chemical reaction between sodium acetate trihydrate and de-mineralised water.

2. A device according to claim 1 characterised in that the chemical reaction is initiated by a shock wave.

3. A device according to claim 2 characterised in that the shock wave is generated by shock wave generating means in the device.

4. A device according to claim 3 characterised in that the shock wave generating means comprises a plate, the deformation of which generates a shock wave.

5. A device according to any preceding claim characterised in that the substance or substances and/or the amount of the or each substance used in the device (1) determines the amount of heat radiated by the device (1) per unit time.

6. A device according to any preceding claim characterised in that the substance or substances and/or the amount of the or each substance used in the device (1) determines the total amount of heat radiated by the device (1).

7. A device according to any preceding claim characterised in that the device (1) is of a sleeve-like form adapted to surround at least a substantial portion of a bottle (2) containing wine or liquor, the heat-radiating substance or substances being contained within a wall of the device (1).

8. A device according to any preceding claim characterised in that the wine is a red wine.

9. A device according to any preceding claim characterised in that the liquor is sake.

## Patentansprüche

1. Vorrichtung zum Anheben der Temperatur von Wein oder alkoholischen Getränken in einem Behälter (2), wobei die Vorrichtung (1) so ausgeführt ist, daß sie zumindest einen Teil des Behälters (2) umgibt und eine Substanz oder Substanzen enthält, die Wärme abstrahlen können, wobei die Wärme von der Vorrichtung (1) auf den Wein oder das alkoholische Getränk im Behälter übertragen wird, um dessen Temperatur zu erhöhen,
dadurch gekennzeichnet,
daß die Wärme durch Kristalle erzeugt wird, die in einer chemischen Reaktion zwischen Natriumacetattrihydrat und entmineralisiertem Wasser entstehen.

2. Vorrichtung nach Anspruch 1,
dadurch gekennzeichnet,
daß die chemische Reaktion durch eine Schockwelle ausgelöst wird.

3. Vorrichtung nach Anspruch 2,
dadurch gekennzeichnet,
daß die Stoßwelle durch Stoßwellengeneratormittel in der Vorrichtung erzeugt wird.

4. Vorrichtung nach Anspruch 3,
dadurch gekennzeichnet,
daß die Stoßwellengeneratormittel eine Platte umfassen, deren Verformung eine Stoßwelle hervorruft.

5. Vorrichtung nach einem der vorhergehenden Ansprüche,
dadurch gekennzeichnet,
daß die Substanz oder Substanzen und/oder die Menge der oder jeder in der Vorrichtung (1) verwendeten Substanz die Wärmemenge bestimmt, die von der Vorrichtung (1) pro Zeiteinheit abgestrahlt wird.

6. Vorrichtung nach einem der vorhergehenden Ansprüche,
dadurch gekennzeichnet,
daß die Substanz oder Substanzen und/oder die Menge der oder jeder in der Vorrichtung (1) verwendeten Substanz die Gesamtwärmemenge bestimmt, die von der Vorrichtung (1) abgestrahlt wird.

7. Vorrichtung nach einem der vorhergehenden Ansprüche,
dadurch gekennzeichnet,
daß die Vorrichtung (1) hülsenförmig ausgeführt ist, um zumindest einen wesentlichen Teil einer Flasche (2), die Wein oder ein alkoholisches Getränk enthält, zu umgeben, wobei die wärmeabstrahlende Substanz oder Substanzen innerhalb einer Wand der Vorrichtung (1) enthalten sind.

8. Vorrichtung nach einem der vorhergehenden Ansprüche,
dadurch gekennzeichnet,
daß der Wein ein Rotwein ist.

9. Vorrichtung nach einem der vorhergehenden Ansprüche,
dadurch gekennzeichnet,
daß das alkoholische Getränk Sake ist.

## Revendications

1. Dispositif pour élever la température d'un vin, ou d'une boisson alcoolisée potable, situé dans un conteneur (2), le dispositif (1) étant adapté pour entourer au moins une partie du conteneur (2), et contenant une substance ou des substances pouvant irradier de la chaleur, chaleur qui est transférée du dispositif (1) vers le vin, ou la boisson alcoolisée, situé dans le conteneur (2) pour élever sa température, caractérisé en ce que la chaleur est entraînée à être produite par des cristaux formés à partir d'une réaction chimique entre du trihydrate d'acétate de sodium et de l'eau déminéralisée.

2. Dispositif selon la revendication 1, caractérisé en ce que la réaction chimique est déclenchée par une onde de choc.

3. Dispositif selon la revendication 2, caractérisé en ce que l'onde de choc est créée par des moyens de création d'onde de choc situés dans le dispositif.

4. Dispositif selon la revendication 3, caractérisé en ce que les moyens de création d'onde de choc comportent une plaque, dont la déformation crée une onde de choc.

5. Dispositif selon l'une quelconque des revendications précédentes, caractérisé en ce que la substance ou les substances et/ou la quantité de la substance ou de chaque substance utilisée dans le dispositif (1) détermine la quantité de chaleur irradiée par le dispositif (1) par unité de temps.

6. Dispositif selon l'une quelconque des revendications précédentes, caractérisé en ce que la substance ou les substances et/ou la quantité de la substance ou de chaque substance utilisée dans le dispositif (1) détermine la quantité totale de chaleur irradiée par le dispositif (1).

7. Dispositif selon l'une quelconque des revendications précédentes, caractérisé en ce que le dispositif a une forme analogue à un manchon, adaptée pour entourer au moins une partie importante d'une bouteille (2) contenant du vin ou de la boisson alcoolisée, la substance ou les substances irradiant de la chaleur étant contenues dans une paroi du dispositif (1).

8. Dispositif selon l'une quelconque des revendications précédentes, caractérisé en ce que le vin est du vin rouge.

9. Dispositif selon l'une quelconque des revendications précédentes, caractérisé en ce que la boisson alcoolisée est du saké.
